# FASCICULE DE BREVET EUROPEEN

(11) **EP 0 362 069 B1**
(45) Date de publication et mention de la délivrance du brevet: **04.08.1993**
(21) Numéro de dépôt: 89402670.7
(22) Date de dépôt: 28.09.1989
(51) Int. Cl.: G02B 7/00

(54) **Dispositif de fixation d'un organe optique tel qu'un filtre sur un support**
Gerät zur Befestigung eines optischen Teils, wie einen Filter auf einem Träger
Device for fixing an optical member such as a filter on a support

(30) Priorité: 30.09.1988 FR 8812812
(43) Date de publication de la demande: 04.04.1990
(73) Titulaire: AEROSPATIALE Société Nationale Industrielle, 75781 Paris Cédex 16 (FR)
(72) Inventeur: Sibilo, Gérard, F-06130 Le Plan de Grasse (FR); Louis, Michel, F-06200 Nice (FR)
(74) Mandataire: Mongrédien, André

(56) Documents cités:
- US-A- 3 758 200
- US-A- 4 448 000
- US-A- 4 536 057
- US-A- 4 586 787
- SOVIET INVENTIONS ILLUSTRATED, semaine 8751, 30 décembre 1987, section P81, résumé no. 87-361947/51, Derwent Publications LTD., Londres, GB; & SU-A-1 312 507 (A.A. KISELEV) 23-05-1987
- PROCEEDINGS OF IGARSS' 86 SYMPOSIUM, Zürich, 8-11 septembre 1986, vol. 1, ref. ESA SP-254, pages 245-250, ESA Publications Division, Paris, FR; M.S. MAXWELL: "The sequential filter imaging radiometer (SFIR) a new instrument configuration for earth observations"

## Description

L'invention concerne un dispositif permettant de fixer sur un support au moins un organe optique d'épaisseur relativement faible tel qu'un filtre, un miroir ou une lentille, notamment lorsque les conditions d'utilisation de cet organe entraînent des variations de température importantes.

Un tel dispositif de fixation peut notamment être utilisé sur un satellite artificiel d'observation infrarouge, pour fixer sur un support des filtres équipant une caméra infrarouge.

Compte tenu de la fragilité des matériaux constituant les filtres (par exemple CdTe, le germanium, le silicium ou CaF₂), les dispositifs de fixation classiques ne peuvent pas être utilisés dans une application de ce type car les différentes sollicitations, notamment mécaniques et thermiques, auxquelles ils sont alors soumis conduiraient à une déformation ou à une rupture des filtres.

En effet, l'observation infrarouge nécessite de travailler à une température inférieure ou égale à 100°K. Etant donné que le montage des filtres s'effectue à température ambiante, c'est-à-dire à environ 300°K, le dispositif de fixation doit donc subir une variation de température supérieure à 200°C. De plus, la tenue mécanique des filtres impose que le gradient thermique à l'intérieur de ces derniers soit maintenu inférieur ou égal à 20°K lors de la descente en température.

Par ailleurs, comme l'ensemble du satellite, le système optique est soumis à des agressions mécaniques sévères sous la forme de vibrations, aussi bien lorsqu'il est à 300°K que lorsqu'il se trouve à très basse température (pouvant être voisine de zéro K).

Enfin, le choix du dispositif de fixation doit aussi tenir compte, dans une telle application, du volume réduit qui lui est alloué sur le satellite, et de la nécessité d'assurer un positionnement précis et pratiquement constant des filtres quelle que soit le température, ainsi que la mise à la masse de ces filtres ou de leur revêtement.

Une première technique de fixation connue dans les utilisations à température ambiante ou voisine de l'ambiante consiste à coller les filtres sur leur support. Cependant, les coefficients de dilatation très différents entre les matériaux des filtres et le support conduiraient, dans le cas d'une utilisation à très basse température, à une déformation ou à une rupture des filtres à l'interface de collage de ces filtres sur leurs supports. Des essais effectués à 4°K sur différentes familles de colles ont mis en évidence ce problème. D'autre part, cette solution ne permet pas non plus d'assurer la mise à la masse des filtres ou de leur revêtement.

Une autre technique utilisée à la température ambiante, notamment pour fixer les lentilles dans les objectifs, consiste à fixer les filtres au moyen d'une bague vissée dans un support. Cependant, cette solution n'est pas non plus satisfaisante car elle est incompatible avec l'application d'une gradient thermique important et ne permet pas de garantir un serrage constant. De plus, l'utilisation d'une bague vissée risque d'entraîner la rupture des filtres sous l'effet de la rotation relative entre la bague et ces derniers lors du serrage. Enfin, elle conduit à accroître de façon importante le volume de l'ensemble.

Une troisième technique de fixation utilisée à des températures proches de l'ambiante consiste à coller le filtre sur une pièce annulaire qui est rendue solidaire du support par des lames de flexion, de façon à ne pas induire de contrainte dans le filtre. Cependant, cette solution ne s'affranchit pas du problème du collage entre le filtre et la pièce annulaire qui le supporte.

Par ailleurs, le document US-A-3 758 200 propose de monter un filtre entre deux plaques articulées entre elles et bloquées en position fermée par une vis.

Dans le document US-A-4 586 787, il est proposé de maintenir une lentille sur un support au moyen d'une bague vissée sur le support. Cette bague est munie sur sa périphérie intérieure de doigts qui sont en appui sur la lentille par l'intermédiaire d'un adhésif.

Par conséquent, tous ces dispositifs connus, habituellement utilisés à température ambiante et pour fixer des organes optiques peu fragiles, ne peuvent pas être utilisés dès lors qu'ils sont soumis à des gradients de température importants et que les organes dont ils assurent la fixation sont fragiles et présentent des caractéristiques physiques qui évoluent avec la température.

Le document US-A-4 448 000 illustre le préambule de la revendication 1. Il décrit la fixation d'un filtre sur un support annulaire au moyen d'une bague. Cette bague est plaquée contre le filtre par des rondelles Belleville montées sur des vis fixées dans le support. Afin d'assurer une étanchéité à haute température et sous un vide poussé, la bague agit sur le filtre par l'intermédiaire d'un joint de polytétrafluoréhylène et des feuilles de plomb sont placées de part et d'autre du filtre.

L'invention a pour objet un dispositif de fixation d'un type nouveau permettant de fixer sur un support au moins un organe optique même fragile, sans entraîner de déformation ou de rupture de cet organe lorsqu'il est soumis à un gradient thermique important et doit fonctionner à très basse température, en assurant un serrage calibré et pratiquement constant indépendamment des agressions mécaniques et thermiques, pour un volume réduit et en assurant la mise à la masse des organes optiques ou de leur revêtement.

Selon l'invention, ce résultat est obtenu au moyen d'un dispositif de fixation conforme à la revendication 1.

Dans un dispositif de fixation ainsi réalisé, la présence de lames séparatrices en un matériau malléable thermiquement conducteur tel que de l'or pur entre les organes optiques et les pièces adjacentes permet de rattraper les défauts de géométrie et d'éliminer les surcontraintes locales, tout en réduisant le gradient thermique à l'intérieur de l'organe optique. Par ailleurs, l'utilisation de rondelles élastiques préalablement étalonnées permet, par le jeu du bras de levier formé par l'organe de bridage, d'assurer un serrage calibré de l'organe optique ainsi qu'une bonne reproductibilité de ce serrage.

En applicant l'effort de serrage sur l'organe optique par l'intermédiaire d'une cale qui coopère de préférence avec la deuxième extrémité de l'organe de bridage par des surfaces définissant un appui rotulant, on assure une répartition optimale de la pression de serrage sur l'organe optique, ce qui permet de diminuer le risque de rupture de ce dernier.

En outre, l'utilisation de lames séparatrices en or permet, par déformation de ces dernières, de rattraper d'éventuels défauts de géométrie entre chaque organe optique et les pièces adjacentes du dispositif.

Selon un autre aspect de l'invention, le support, les vis et les organes de bridage sont réalisés en un même matériau tel que le titane afin d'éviter les dilatations différentielles entre les différentes pièces du dispositif, ce qui assure le maintien de la pression de serrage indépendamment de la température. L'utilisation du titane présentant un coefficient de dilatation très faible améliore encore ce résultat et s'adapte parfaitement aux applications spatiales, compte tenu de sa faible densité.

Enfin, bien que le dispositif de fixation selon l'invention puisse être utilisé pour fixer des organes optiques de toute nature tels que des filtres de forme quelconque, des miroirs ou des lentilles, notamment dès que le fonctionnement du système optique associé à cet organe nécessite des températures très éloignées de l'ambiante, l'invention s'applique avantageusement au cas où l'organe optique est un filtre circulaire variable en forme de secteur de couronne et le support une roue comportant une fente en arc de cercle en face du filtre, de telle sorte qu'une rotation de la roue permet d'amener différentes parties du filtre en face de l'axe optique d'un système d'observation infrarouge, traversant ladite fente.

Un mode de réalisation préféré de l'invention va à présent être décrit, à titre d'exemple non limitatif, en se référant aux dessins annexés dans lesquels :
- la figure 1 est une vue en perspective représentant très schématiquement une partie d'un système d'observation infrarouge conçu pour être embarqué sur un satellite artificiel et comportant des filtres circulaires variables montés sur une roue par l'intermédiaire d'un dispositif de fixation conforme à l'invention ;
- la figure 2 est une vue en coupe radiale d'une partie de la roue de la figure 1, représentant plus en détail le dispositif de fixation des filtres sur cette roue ; et
- la figure 3 est une vue à plus grande échelle représentant la coopération entre l'extrémité de la bride du dispositif de fixation et la cale interposée entre cette dernière et les filtres.

Dans l'exemple de réalisation représenté sur les figures, le dispositif de fixation selon l'invention est utilisé pour monter sur un support en forme de roue ou de disque 10 des filtres optiques 12 en forme de secteurs de couronne, ces filtres étant utilisées sur une caméra infrarouge embarquée sur un satellite d'observation infrarouge, pour faire des analyses spectrales.

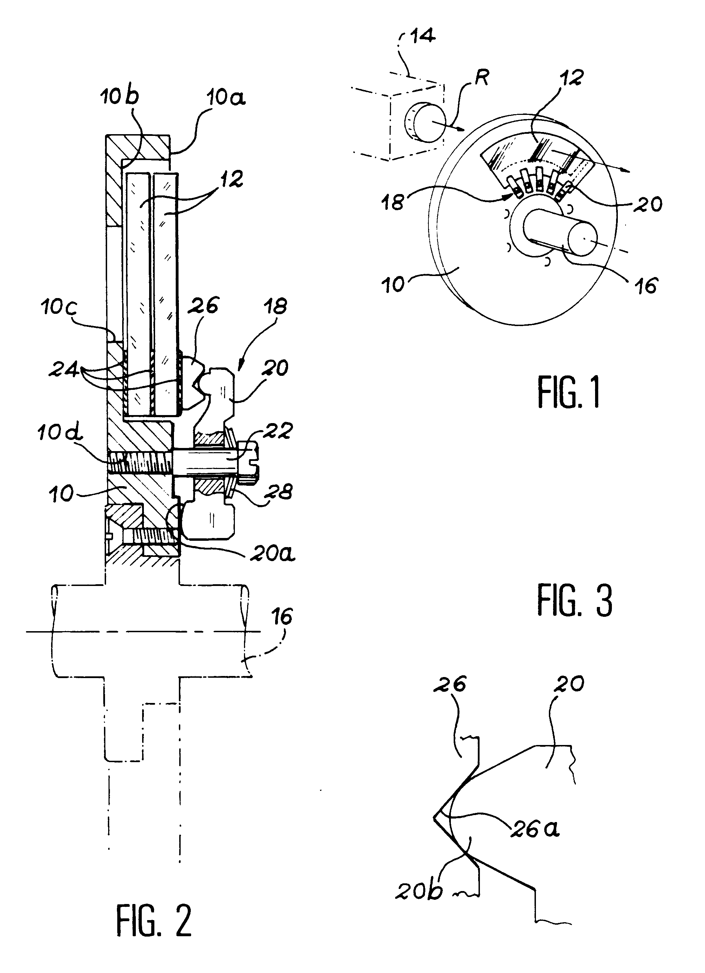

De façon plus précise, un rayon lumineux R issu d'un télescope 14 est orienté vers une expérience embarquée sur le satellite, au travers d'au moins un filtre 12, comme l'illustre la figure 1. Le ou les filtres sélectionnent la gamme de longueur d'onde retenue et le signal lumineux est ensuite reçu par un détecteur (non représenté), dans lequel l'intensité lumineuse du signal est transformée en intensité électrique, afin de pouvoir être traitée par des circuits électroniques associés.

Dans le cas particulier illustré sur les figures, la forme en secteur de couronne des filtres 12 et leur montage sur un support en forme de roue 10 s'expliquent par l'utilisation de filtres circulaires variables ou "CVF", dont les propriétés optiques, c'est-à-dire la gamme de longueur d'onde retenue, évoluent d'une extrémité circonférentielle à l'autre. Selon l'expérience réalisée, un moteur pas à pas (non représenté) agissant sur l'axe 16 de la roue permet de sélectionner la gamme de longueur d'onde retenue en plaçant la partie des filtres correspondante sur l'axe optique du rayon lumineux R.

Dans la pratique, les filtres CVF sont des secteurs de couronne dont l'angle au centre est voisin de 90° et dont l'épaisseur est très faible, généralement environ 2 mm, les rayons intérieur et extérieur des filtres étant respectivement d'environ 30 mm et d'environ 53 mm. Selon le cas, les matériaux constituant ces filtres sont du CdTe, du germanium, du silicium ou du CaF₂. Tous ces matériaux ont pour point commun d'être particulièrement fragiles, compte tenu de la faible épaisseur des filtres.

Par ailleurs, il est important de noter que l'observation infrarouge nécessite une température inférieure ou égale à 100°K. En effet, l'observation de sources infrarouge de très faible intensité nécessite de minimiser le rayonnement propre de l'instrument et on sait, d'après la loi de Stephan Bolzmann, que l'intensité du rayonnement R est proportionnelle à T⁴, T étant la température absolue en °K (R = KεT⁴, avec K : coefficient de Stephan Bolzmann et ε : émissivité infrarouge de la surface, 0 ≦ ε ≦ 1).

Sur un satellite artificiel, il est donc nécessaire de prévoir une source froide telle qu'un réservoir d'hélium liquide. En effet, l'utilisation d'hélium superfluide permet d'atteindre une température de fonctionnement de 4°K. L'ensemble du système optique constitué par le télescope, son optique incluant les filtres CVF et les détecteurs associés est donc maintenu à 4°K (l'hydrogène permettrait de se rapprocher encore plus de 0°K, mais il est dangereux d'emploi).

Conformément à l'invention, les filtres 12 sont montés sur la roue 10 par un dispositif de fixation 18 de conception originale. En effet, ce dispositif de fixation est réalisé de telle sorte qu'il permet de supprimer tout risque de déformation ou de cassure des filtres, malgré les conditions particulières de température et de sollicitation mécanique auxquels ils sont soumis, notamment en assurant un serrage de ces filtres calibré et pratiquement indépendant de la température.

A cet effet, le dispositif de fixation 18 comprend des brides 20, par exemple au nombre de cinq (figure 1), qui sont fixées sur la roue 10 par des vis 22, de façon à prendre appui par leurs extrémités opposées respectivement sur la roue 10 et sur les filtres 12, à proximité du bord circonférentiel intérieur de ces derniers.

De façon plus précise, on voit sur la figure 2 que la roue 10, qui présente généralement la forme d'un disque, comporte sur une de ses faces 10a au moins un évidement 10b dont le contour correspond au contour des filtres 12 et dont la profondeur est, par exemple, légèrement inférieure à l'épaisseur cumulée de deux filtres 12 destinés à être placés dans cet évidement. Sur toute la longueur de l'évidement 10b, une fente en arc de cercle 10c, centrée comme l'évidement 10b sur l'axe de la roue, traverse cette dernière. Cette fente permet au rayon lumineux R issu du télescope 14 de parvenir jusqu'aux filtres 12 lorsque ceux-ci sont montés dans l'évidement 10b.

Lorsque les filtres 12 sont montés dans l'évidement 10b, une lame séparatrice 24, de préférence en or, est interposée entre le fond de l'évidement 10b et le premier filtre 12, entre les deux filtres 12 et entre le deuxième filtre 12 et des cales 26 par lesquelles chacune des brides 20 est en appui sur les filtres. Plus précisément, les lames d'or 24 sont placées au droit de chacune des cales 26, c'est-à-dire dans une zone adjacente aux bords périphériques intérieurs des filtres 12. Ces lames d'or, dont l'épaisseur est par exemple voisine de 0,1 mm, permettent de rattraper les défauts de géométrie des pièces en contact tout en assurant un pont thermique entre ces pièces. Les feuilles d'or 24 ont également pour fonction d'assurer la mise à la masse des filtres 12.

Comme le montre la figure 2, chacune des brides 20 est orientée approximativement radialement par rapport à la roue 10 et comporte une première extrémité, proche de l'axe de la roue, qui est en appui sur la face 10a de cette dernière par une surface bombée 20a.

De plus, chacune des brides 20 est en appui sur les filtres 12, par l'intermédiaire de la cale 26 correspondante, par son extrémité la plus éloignée de l'axe de la roue. De façon plus précise et comme l'illustre la figure 3, cette deuxième extrémité de chacune des brides 20 est en appui sur la cale 26 correspondante par des surfaces définissant un appui rotulant. Ces surfaces sont formées respectivement sur une partie en saillie 20b, à section en arc de cercle, de la bride 20 et dans un évidement 26a, à section en forme de V, ménagé dans la cale 26. La partie en saillie 20b peut notamment avoir la forme d'un demi tore centré sur l'axe de la roue 10.

Chacune des cales 26 est en contact avec le deuxième filtre 12, par l'intermédiaire de l'une des lames d'or 24, par une face plane chanfreinée et ébavurée.

Lorsqu'un effort de serrage est appliqué sur chacune des brides 20 par la vis 22 correspondante, la coopération de la bride avec la cale 26 par un appui rotulant et la réalisation particulière de cette cale assure une répartition optimale de la pression de serrage sur les filtres, c'est-à-dire une répartition de la pression de serrage sur la plus grande surface possible des filtres. Les risques de rupture des filtres lors du serrage sont ainsi supprimés.

Enfin, pour permettre de réaliser le serrage, chacune des vis 22 traverse la bride 20 correspondante approximativement à égale distance entre la surface 20a et la partie en saillie 20b par lesquelles cette bride est respectivement en appui sur la roue 10 et sur la cale 26. La vis 22 est vissée dans un trou taraudé 10d traversant la roue 10 parallèlement à son axe, à proximité du bord intérieur de l'évidement 10b.

Selon une caractéristique essentielle de l'invention, une ou plusieurs rondelles élastiques telles que des rondelles Belleville 28 sont interposées entre la tête de chacune des vis 22 et la bride 20 correspondante. Ces rondelles élastiques 28 permettent, lors du serrage des vis 22, de calibrer l'effort de serrage exercé sur les filtres 12 au travers des brides 20, en contrôlant la flèche de ces rondelles.

L'opération de serrage est essentielle, car un serrage trop important ou mal réparti conduirait à une rupture ou un risque de rupture des filtres, alors qu'au contraire un serrage insuffisant conduirait à un glissement des filtres.

En pratique, cette opération s'effectue en deux temps. Un premier serrage, contrôlé en mesurant la flèche des rondelles 28, est d'abord réalisé en commençant par la vis 22 la plus proche du centre des filtres et en terminant par les vis les plus proches des extrémités circonférentielles des filtres. Pour tenir compte du fluage des lames d'or 24, un deuxième serrage est réalisé, de la même manière, environ 12 heures après le premier.

Grâce à l'agencement qui vient d'être décrit, qui présente pour avantage annexe d'occuper un volume réduit, il est donc possible d'assurer un serrage calibré des filtres 12 sur la roue 10, permettant de garantir la rigidité de l'ensemble en dépit des vibrations et du gradient thermique important (de 300°K à 4°K) auquel il est soumis. Ce calibrage est obtenu en contrôlant la flèche des rondelles élastiques 28, grâce à la connaissance du bras de levier par lequel l'effort de serrage ainsi exercé est transmis aux filtres au travers des brides 20, et en utilisant une procédure de serrage tenant compte du fluage des lames d'or 24. De plus, l'utilisation d'une même matériau tel que le titane pour réaliser la roue 10, les cales 26, les vis 22 et les brides 20 permet de supprimer toute dilatation différentielle entre ces organes et, dans le cas du titane, d'avoir un coefficient de dilatation global très faible. Le serrage calibré obtenu lors du montage est ainsi quasi constant quelle que soit la température.

En résumé, le dispositif de fixation selon l'invention permet de s'affranchir des dilatations différentielles, c'est-à-dire qu'il n'induit pas de contrainte sur les filtres lors des variations de température. Tout risque de déformation ou de cassure de ces filtres est donc évité.

Bien entendu, l'invention n'est pas limitée au mode de réalisation qui vient d'être décrit à titre d'exemple, mais en couvre toutes les variantes déterminées par les revendications.

Ainsi, compte tenu des caractéristiques générales du dispositif de fixation de l'invention qui viennent d'être énoncées, on comprend qu'un tel dispositif n'est pas limité au montage des filtres CVF mais peut être utilisé pour fixer tout organe optique fragile et de faible épaisseur (inférieure ou égale à environ 16 mm), tel que des filtres circulaires, des filtres rectangulaires, des miroirs ou des lentilles.

Par ailleurs, l'application de ce dispositif de fixation à des installations implantées sur un satellite n'est pas limitative. En effet, ce dispositif peut être utilisé à chaque fois que l'installation subit des différences de température importantes, et notamment pour toutes les observations infrarouge, même terrestres, puisque ces observations nécessitent de travailler à des températures inférieures ou égales à 100°K.

En outre, le dispositif de fixation proprement dit peut être utilisé pour fixer un ou plusieurs organes optiques simultanément, le nombre des brides utilisées pouvant varier notamment en fonction de la forme de l'organe optique. Par ailleurs, les différentes pièces de l'assemblage peuvent être réalisées en un autre matériau que le titane présentant un faible coefficient de dilatation, et notamment en Invar, en particulier pour les applications terrestres pour lesquelles il n'est pas nécessaire de recourir à un matériau de faible densité. Les lames séparatrices peuvent également être réalisées en un autre matériau thermiquement conducteur et malléable, dans le cas où des caractéristiques mécaniques moins bonnes que celles de l'or peuvent être acceptées.

## Revendications

1. Dispositif de fixation d'au moins un organe optique (12) d'épaisseur relativement faible sur un support (10), comprenant au moins un organe de bridage (20) dont une partie est en appui sur ledit organe optique (12) par l'intermédiaire d'une cale (26), l'organe de bridage (20) étant traversé par au moins une vis de fixation (22) vissée dans le support, au moins une rondelle élastique (28) étant montée entre l'organe de bridage et la tête de la vis, de façon à serrer ledit organe optique contre le support avec une force calibrée, des lames séparatrices (24) en un matériau malléable thermiquement conducteur étant interposées, d'une part, entre l'organe optique et la partie du support sur laquelle cet organe est en appui et, d'autre part, entre ledit organe optique et ladite cale (26), caractérisé par le fait que chacun des organes de bridage est constitué par une pièce (20) en forme de segment allongé, dont une première extrémité est en appui sur le support (10) et dont la deuxième extrémité est en contact avec la cale (26) par des surfaces définissant un appui rotulant.

2. Dispositif selon la revendication 1, caractérisé par le fait que la deuxième extrémité de l'organe de bridage (20) est en appui sur un évidement (26a) à section en forme de V formé sur la cale (26) par une saillie (20b) à section en forme de secteur circulaire.

3. Dispositif selon l'une quelconque des revendications 1 et 2, caractérisé par le fait que les lames séparatrices (24) sont des lames d'or pur.

4. Dispositif selon l'une quelconque des revendications 1 à 3, caractérisé par le fait que le support (10), les vis (22) et les organes de bridages (20) sont réalisés en un même matériau.

5. Dispositif selon la revendication 4, caractérisé par le fait que le support (10), les vis (22) et les organes de bridages (20) sont réalisés en titane.

6. Dispositif selon l'une quelconque des revendications 1 à 5, caractérisé par le fait que ledit organe optique est un filtre circulaire variable (12) en forme de secteur de couronne, et le support une roue (10) comportant une fente (10c) en arc de cercle en face du filtre, de telle sorte qu'une rotation de la roue permet d'amener différentes parties du filtre en face de l'axe optique d'un système d'observation infrarouge, traversant ladite fente.

7. Dispositif selon la revendication 6, caractérisé par le fait que plusieurs organes de bridages (20) sont en appui sur le filtre (12) à proximité d'un bord intérieur de ce dernier.

## Patentansprüche

1. Befestigungsvorrichtung für wenigstens ein optisches Bauteil (12) von relativ geringer Dicke an einem Träger (10), die wenigstens ein Klemmorgan (20) umfaßt, dessen einer Teil sich abstützt auf dem genannten optischen Bauteil (12) mittels eines Unterlagsstücks (26), wobei das Klemmorgan (20) durchquert wird von wenigstens einer in den Träger geschraubten Befestigungsschraube (22), wenigstens einer elastischen Unterlagsscheibe (28), die zwischen dem Klemmorgan und dem Kopf der Schraube so angeordnet ist, daß sie das optische Bauteil mit einer kalibrierten Kraft gegen den Träger preßt, wobei Trennlamellen (24) aus einem geschmeidigen, thermisch leitenden Material dazwischen angeordnet sind, einerseits zwischen dem optischen Bauteil und dem Teil des Trägers, auf dem dieses Bauteil sich abstützt und, andererseits, zwischen dem optischen Bauteil und dem genannten Unterlagsstück (26)
dadurch **gekennzeichnet,**
daß jedes der Klemmorgane gebildet wird durch ein Teil (20) von der Form eines gestreckten Segments, dessen erstes Ende sich auf dem Träger (10) abstützt und dessen zweites Ende in Kontakt steht mit dem Unterlagsstück (26) durch Oberflächen, die eine kugelgelenkartige Abstützung definieren.

2. Vorrichtung nach Anspruch 1, dadurch gekennzeichnet, daß das zweite Ende des Klemmorgans (20) sich in einer Aussparung (26a) mit V-förmigem Querschnitt an dem Unterlagsstück (26) abstützt mittels eines Vorsprungs (20b) mit einem kreisförmigen Querschnitt.

3. Vorrichtung nach einem der Ansprüche 1 und 2, dadurch gekennzeichnet, daß die Trennlamellen (24) Lamellen aus reinem Gold sind.

4. Vorrichtung nach einem der Ansprüche 1 bis 3, dadurch gekennzeichnet, daß der Träger (10), die Schrauben (22) und die Klemmorgane (20) aus demselben Material hergestellt sind.

5. Vorrichtung nach Anspruch 4, dadurch gekennzeichnet, daß der Träger (10), die Schrauben (22) und die Klemmorgane (20) aus Titan hergestellt sind.

6. Vorrichtung nach einem der Ansprüche 1 bis 5, dadurch gekennzeichnet, daß das genannte optische Bauteil ein variabler kreisförmiger Filter (12) mit der Form eines Kranzsektors ist, und der Träger ein Rad (10), das einen kreisbogenförmigen Spalt (10c) vor dem Filter aufweist, so daß eine Drehung des Rades erlaubt, verschiedene Teile des Filters vor die optische Achse eines Infrarot-Beobachtungssystems zu bringen, die den genannten Spalt durchquert.

7. Vorrichtung nach Anspruch 6, dadurch gekennzeichnet, daß sich mehrere Klemmorgane (20) auf dem Filter (12) in der Nähe eines Innenrandes von diesem letzteren abstützen.

## Claims

1. Device for fixing at least one optical member (12) of relatively limited thickness to a support (10), incorporating at least one flanging member (20), whereof a part bears on said optical member (12) by means of a shim (26), the flanging member (20) being traversed by at least one fixing screw (22) fixed into the support, at least one elastic washer (28) being fitted between the flanging member and the head of the screw, so as to fix said optical member against the support with a calibrated force, separating strips (24) made from a thermally conductive malleable material being interposed on the one hand between the optical member and the portion of the support on which said member bears and on the other hand between said optical member and said shim (26), characterized in that each of the flanging members is constituted by a part (20) shaped like an elongated segment, whereof a first end bears on the support (20) and whereof the second end is in contact with the shim (26) by surfaces defining a swivel bearing.

2. Device according to claim 1, characterized in that the second end of the flanging member (20) bears on a recess (26a) having a V-shaped section and formed on the shim (26) by a projection (20b) having a circular sector-shaped section.

3. Device according to either of the claims 1 and 2, characterized in that the separating strips (24) are pure gold strips.

4. Device according to any one of the claims 1 to 3, characterized in that the support (10), the screws (22) and the flanging members (20) are made from the same material.

5. Device according to claim 4, characterized in that the support (10), the screws (22) and the flanging members (20) are made from titanium.

6. Device according to any one of the claims 1 to 5, characterized in that the optical member is a variable circular filter (12) in the form of a ring sector and the support a wheel (10) having a circular arc slit (10c) in front of the filter, so that a rotation of the wheel makes it possible to bring different parts of the filter in front of the optical axis of an infrared observation system traversing said slit.

7. Device according to claim 6, characterized in that several flanging members (20) bear on the filter (12) in the vicinity of an inner edge thereof.
